(19) Europäisches Patentamt
European Patent Office
Office européen des brevets

(11) Veröffentlichungsnummer: **0 063 321**
**B1**

# (12) EUROPÄISCHE PATENTSCHRIFT

(45) Veröffentlichungstag der Patentschrift: **18.03.87**

(51) Int. Cl.⁴: **C 09 B 67/54,** C 09 B 67/10

(21) Anmeldenummer: **82103014.5**

(22) Anmeldetag: **08.04.82**

(54) **Verfahren zur Reinigung von rohen organischen Pigmenten.**

(30) Priorität: **13.04.81 DE 3114928**

(43) Veröffentlichungstag der Anmeldung: **27.10.82 Patentblatt 82/43**

(45) Bekanntmachung des Hinweises auf die Patenterteilung: **18.03.87 Patentblatt 87/12**

(84) Benannte Vertragsstaaten: **CH DE FR GB IT LI**

(56) Entgegenhaltungen:
**DE-B-1 114 462**
**FR-A-1 178 755**
**FR-A-2 269 991**
**US-A-3 804 824**

**CHEMICAL ABSTRACTS, Band 90, Nr. 24, Juni 1979, Seite 87, Nr. 188517j, Columbus, Ohio, USA**

(73) Patentinhaber: **BASF Aktiengesellschaft, Carl-Bosch- Strasse 38, D-6700 Ludwigshafen (DE)**

(72) Erfinder: **Fabian, Wolfgang, Dr., Pfarrwaldblick 5, D-6901 Wilhelmsfeld (DE)**
Erfinder: **Polster, Rudolf, Dr., Carostrasse 43, D-6710 Frankenthal (DE)**

**EP 0 063 321 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ein Verfahren zur Reinigung von rohen organischen Pigmenten.

Da die bei der Synthese anfallenden Rohpigmente mehr oder minder hohe Anteile an Nebenprodukten oder Verunreinigungen enthalten, die bei der Verwendung der entsprechenden Pigmente stören, werden die Rohpigmente in vielen Fällen besonderen Reinigungsprozeduren unterzogen: z. B. Waschen oder Auskochen des Rohpigments mit einem oder mehreren Lösungsmitteln, die für die Verunreinigungen ein gutes Lösungsvermögen aufweisen; Mahlen der Rohpigmente in Gegenwart von Lösungsmitteln, die für die Verunreinigungen ein gutes Lösungsvermögen haben, oder Lösen der Rohpigmente in geeigneten Flüssigkeiten wie konzentrierter Schwefelsäure, Oleum oder Chlorsulfonsäure und fraktioniertes Fällen.

Die beiden ersteren Verfahren haben den Nachteil, daß im Kristall eingeschlossene Verunreinigungen nicht oder nicht vollständig herausgelöst werden. Die fraktionierte Fällung aus konzentrierter Schwefelsäure hat den Nachteil, daß die Verluste recht hoch sind und daß die anfallende Schwefelsäure aus ökologischen Gründen wieder aufgearbeitet werden muß.

Aus der FR-A 2 269 991 ist ein Verfahren zur vollständigen Isolierung von Feststoffen aus Suspensionen bekannt. Bei diesem Verfahren werden die Suspensionen mit einer weiteren Flüssigkeit oder einem Gemisch von Flüssigkeiten, welche die in der Suspension enthaltenen Feststoffe benetzen oder lösen und in der Suspensions flüssigkeit nicht löslich oder beschränkt löslich sind, versetzt, wobei sich ein Mehrphasensystem bildet, und dieses Gemisch durchmischt bis sich Agglomerate der Feststoffe bilden, die dann vom Mehrphasensystem abgetrennt werden.

Als Suspensionsmedien kommen Wasser und organische Flüssigkeiten in Betracht.

Als weitere Flüssigkeit, die den Feststoff benetzt bis löst, kommt eine in Betracht, die in der Suspensionsflüssigkeit unlöslich oder nur beschränkt löslich ist. Diese weitere Flüssigkeit ist von der Natur der zu agglomerierenden Feststoffe abhängig.

In der Beschreibung ist angegeben, daß das Verfahran die Möglichkeit bietet, Verunreinigungen oder Nebenprodukte selektiv abzutrennen.

Aufgabe der vorliegenden Erfindung war es, ein Verfahren zur Reinigung von Rohpigmenten zu entwickeln, nach dem hochreine Rohpigmente erhalten werden, ohne daß die Nachteile der Reinigungsverfahren des Standes der Technik auftreten.

Es wurde gefunden, daß man rohe organische Pigmente durch Suspendieren in organischen Flüssigkeiten reinigen kann, wenn man das rohe Pigment in einem Gemisch aus Ameisensäure, Ethylenglykol, Glycerin oder Gemische davon als erste Flüssigkeit und Benzol, Toluol, Xylol, Propylbenzol, Butylbenzol, Chlorbenzol, Dichlorbenzol, Trichlorbenzol, Chlortoluol, Nitrobenzol, Nitrotoluol, Pentan, Hexan, Heptan, Octan, Petrolether, Cyclohexan, Chloroform, Tetrachlorkohlenstoff, Dichlorethan, Dichlorethylen, Trichlorethylen, Tetrachlorethylen, 1,2-Dibromethan oder Gemische davon als zweite Flüssigkeit suspendiert, die Suspension bei 50 bis 180° C bis zur Einstellung des Gleichgewichts mischt, die Phasen sich trennen läßt, die die Verunreinigungen enthaltende Phase (erste Flüssigkeit) abtrennt und das gereinigte Pigment aus der anderen Phase (zweite Flüssigkeit) isoliert. Nach dem Verfahren erhält man Rohpigmente mit einem hohen Reingehalt, die nach der Überführung in Pigmentformen farbstarke und brillante Färbungen geben. Das erfindungsgemäße Verfahren ist umweltfreundlich, da die verwendeten organischen Flüssigkeiten nach der Aufarbeitung wiederverwendet werden können.

Das Ergebnis war überraschend, da dem Fachmann bekannt ist, daß durch Auskochen von verunreinigten grobkristallinen Rohpigmenten eine ausreichende Reinigung des Rohpigments in der Regel nicht erzielt wird. Andererseits erhält man bei Digerieren von feinteiligen Rohpigmenten in organischen Lösungsmitteln nicht filtrierbare feinste Suspensionen.

Aufgrund der Kenntnis aus der FR-A 2 269 991 hätte man erwarten müssen, daß grundsätzlich alle Mischungen aus zwei mindestens partiell miteinander nicht mischbaren organischen Flüssigkeiten zum Ziel führen würden, wenn eine der Flüssigkeiten das Pigment benetzt (d.h. Affinität zum Pigment aufweist). Bei Versuchen mit nach dem Backverfahren hergestelltem Kupferphthalocyanin wurde diese Erwartung nicht bestätigt. Bei einigen Paaren von organischen Flüssigkeiten trat keine Bildung von Agglomeraten (Granulaten) ein oder es gibt keine Trennung der Phasen. Bei anderen Paaren organischer Flüssigkeiten trat zwar Bildung von Agglomeraten ein, jedoch war die von Kupferphthalocyanin freie Phase nur wenig gefärbt bis praktisch farblos oder die entstandenen Agglomerate zerfallen beim Waschen mit der ersten Flüssigkeit.

Nur die erfindungsgemäßen Kombinationen erfüllen die Anforderungen, die an ein Reinigungsverfahren gestellt werden.

Das vorliegende Verfahren hat noch weitere Vorteile:

Bei Anwendung auf feinteilige agglomerierte Rohpigmente können diese gereinigt und gleichzeitig oder anschließend in der zweiten Flüssigkeit in Pigmentformen überführt werden, so daß Reinigung und Finish zusammengefaßt werden können.

Für den Fall, daß die Synthese des Pigments in organischen Lösungsmitteln erfolgt, kann das dabei erhaltene Rohpigment in Form der bei der

Synthese anfallenden Suspension, gegebenenfalls nach dem Aufkonzentrieren, direkt durch Zugeben einer anderen Flüssigkeit, die mit der in der Suspension enthaltenen nicht vollständig mischbar bis nicht mischbar ist, ohne Isolierung und Trocknung gereinigt werden.

Das Verfahren wird in allgemeinen so durchgeführt, daß man das Rohpigment entweder in eine der Flüssigkeiten oder in das Gemisch aus erster und zweiter Flüssigkeit einträgt, gegebenenfalls die erste bzw. zweite Flüssigkeit sofort oder zu der auf 50 bis 180°C erwärmten Suspension zugibt, die Mischung auf Temperaturen von 50 bis 180°C erwärmt und bei der gewünschten Temperatur hält bis sich das Gleichgewicht eingestellt hat. Nach dem Trennen der Phasen wird die Phase aus der ersten Flüssigkeit, welche die Verunreinigungen enthält, abgetrennt und das gereinigte Pigment aus der zweiten Flüssigkeit isoliert. Gewünschtenfalls kann die Reinigung wiederholt werden, wobei in diesem Fall die abgetrennte Phase durch die reine erste Flüssigkeit ersetzt wird.

Das heterogene Gemisch aus den Flüssigkeiten besteht vorteilhafter weise aus Ameisensäure, Ethylenglykol, Glycerin oder Gemische davon als erste Flüssigkeit und Benzol, Toluol, Xylol, Propylbenzol, Butylbenzol, Chlorbenzol, Dichlorbenzol, Trichlorbenzol, Chlortoluol, Nitrobenzol, Nitrotoluol, Pentan, Hexan, Heptan, Octan, Petrolether, Cyclohexan, Chloroform, Tetrachlorkohlenstoff Dichlorethan, Dichlorethylen, Trichlorethylen, Tetrachlorethylen, 1,2-Dibromethan oder Gemische davon als zweite Flüssigkeit.

Bei den erfindungsgemäß zu verwendenden Flüssigkeitsgemischen gehen bei der Behandlung von verunreinigten Pigmenten die Verunreinigungen in die erste und das Pigment in die zweite Flüssigkeit, so daß nach der Phasentrennung beide Bestandteile leicht voneinander getrennt werden können.

Die erste Flüssigkeit sind Ameisensäure, Ethylenglykol, Glycerin oder Gemische davon.

Die zweite Flüssigkeit ist: Benzol, Toluol, Xylol, Propylbenzol, Butylbenzol, Chlorbenzol, Dichlorbenzol, Trichlorbenzol, Chlortoluol, Nitrobenzol, Nitrotoluol; Pentan Hexan, Heptan, Octan, Petrolether, Cyclohexan, Chloroform, Tetrachlorkohlenstoff, 1,2-Dichlorethan, Trichlorethylen, Dichlorethylen, Tetrachlorethylen und 1,2-Dibromethan oder Gemische dieser Flüssigkeiten.

Bevorzugte Paare aus erster und zweiter Flüssigkeit sind Ameisensäure, Glycerin oder Ethylenglykol und Benzol, Toluol, Xylol, Butylbenzol, Chlorbenzol, Cyclohexan, Hexan, Heptan, Octan, Chloroform, Tetrachlorkohlenstoff, 1,2-Dichlorethan, Trichlorethylen, Tetrachlorethylen und 1,2-Dibromethan.

Als zweite Flüssigkeiten sind Xylol, Tetrachlorethylen, Trichlorethylen und 1,2-Dibromethan bevorzugt.

Besonders bevorzugte Paare von organischen Flüssigkeiten sind Gemische aus Ethylenglykol/p-Xylol oder Xylolgemischen, Ethylenglykol/Tetrachlorethylen, Ethylenglykol/Trichlorethylen, Ethylenglykol/ 1, 2-Dibromethan, Ameisensäure/p-Xylol oder Xylolgemischen und Ameisensäure/ Tetrachlorethylen da mit diesen besonders hohe Reinigungseffekte erzielt werden.

Die Mengen an erster und zweiter Flüssigkeit sind innerhalb weiter Grenzen variierbar. Die Mindestmengen an den Flüssigkeiten sind dadurch bestimmt, daß das Gemisch mit dem Rohpigment durchmischbar ist und daß sich bei der Phasentrennung auch beide Phasen zusammenhängend ausbilden können.

Vorteilhafterweise wendet man die 0,5- bis 2,5fache, vorzugsweise die 0,8- bis 1,5fache Gewichtsmenge, bezogen auf Rohpigment, an erster Flüssigkeit an.

Von der zweiten Flüssigkeit werden in der Regel - be zogen auf Rohpigment - die 0,5- bis 5fache, vorzugsweise die 0, 5- bis 1, 5fache Gewichtsmenge angewendet.

Vorzugsweise verfährt man bei der Reinigung so, daß man zuerst die Mischung aus dem Rohpigment und der ersten Flüssigkeit auf die gewünschte Temperatur erwärmt und nach etwa 1/2 h bis einigen Stunden die zweite Flüssigkeit bei der Temperatur unter Rühren zugibt, wobei die Suspension in zwei Phasen zerfällt.

So erhält man bei rohem Kupferphthalocyanin mit einem Gemisch aus Ethylenglykol und Xylol eine Kupferphthalocyanin-Xylol-Paste als die eine Phase und eine klare grünlich gelb bis braun gefärbte Ethylenglykolphase.

Die Glykolphase kann von der das Rohpigment enthaltenden Phase leicht getrennt werden, z.B. durch Ablassen durch das Bodenventil des Rührkessels. Auf diese Weise können etwa 80 bis 90 % des verwendeten Ethylenglykols entfernt werden. Zur weiteren Reinigung, bzw. zur Entfernung des verunreinigten Ethylenglykols kann reines Ethylenglykol nachgegeben und die Mischung gut durchmischt werden. Die Glykolphase wird nach der Phasentrennung wie oben angegeben entfernt.

Falls eine weitere Reinigung gewünscht oder notwendig ist, wird das Gemisch nach dem Zugeben der ersten Flüssigkeit nochmals erwärmt und nach dem Trennen der Phasen die erste Flüssigkeit abgetrennt. Der Vorgang kann so oft wiederholt werden, bis die erste Flüssigkeit ungefärbt ist oder keine Verunreinigungen mehr enthält. Aus der zweiten Flüssigkeit kann dann das Rohpigment isoliert werden, z.B. durch Trocknung, d.h. durch Verdampfen der zweiten Flüssigkeit.

Die abgetrennte erste Flüssigkeit kann durch Destillation zurückgewonnen und wiederverwendet werden. Die bei der Destillation anfallenden Rückstände lassen sich durch Verbrennen vernichten. Gegebenenfalls können daraus nicht umgesetzte Ausgangsprodukte, z. B. Kupfersalze zurückgewonnen werden.

Beim Trocknen des Gemisches aus dem

gereinigten Produkt und der zweiten Flüssigkeit kann letztere durch Kondensation zurückgewonnen und wieder verwendet werden.

Als organische Rohpigmente kommen für das erfindungsgemäße Verfahren z. B. solche in Betracht, die sich vom Phthalocyanin, vom Chinophthalon, vom Perylen-3, 4, 9, 10-tetracarbonsäurediimid, von Küpenfarbstoffen auf der Basis Anthrachinon und seiner Substitutionsprodukte, von Benzanthron, vom Dioxazin und Azopigmenten ableiten.

Im einzelnen sind z. B. zu nennen: Kupferphthalocyanine, die bis zu 2 Chlor oder Bromatome im Molekül enthalten, Polychlorkupferphthalocyanin mit bis zu 50 Gew.% Chlor, Polybromchlorkupferphthalocyanin mit Bromgehalten von bis zu 65 Gew.% Brom, Tetrachlorphthalimidotetrachlorchinophthalon, Perylen-3, 4, 9, 10-tetracarbonsäurediimide, die an den Imidstickstoffatomen gegebenenfalls substituierte Phenylgruppen, Phenylazophenylgruppen oder Phenalkylgruppen tragen; Flavanthron; Pyranthron, Chlorpyranthrone, Chlorbrompyranthrone, Brompyranthrone; Tetrabrompyranthron, Dioxazine; Vat. Yellow 20, C. I. Nr. 68 420. Vorzugsweise wird das Verfahren bei Phthalocyaninen angewendet.

Bei feinteiligen agglomerierten Rohpigmenten, bei denen die Agglomerate aus Primärteilchen von $\leqslant 0{,}1\ \mu m$ aufgebaut sind, kann die Reinigung und das Überführen in die Pigmentform als Eintopfverfahren durchgeführt werden. Bei dieser Variante wird das agglomerierte feinteilige Rohpigment vorzugsweise zunächst in der ersten Flüssigkeit in der Wärme gerührt und dann die zweite Flüssigkeit in der Wärme unter Rühren zugegeben. Nach dem Trennen der zwei Phasen wird die erste Flüssigkeit abgetrennt, gegebenenfalls das Gemisch aus zweiter Flüssigkeit und Rohpigment nochmals mit reiner erster Flüssigkeit ausgerührt und die erste Flüssigkeit abgetrennt. Anschließend wird das feinteilige agglomerierte Rohpigment, nachdem Reste der ersten Flüssigkeit, z.B. als azeotropes Gemisch mit der zweiten Flüssigkeit, entfernt worden sind, in der zweiten Flüssigkeit in der Wärme durch Rekristallisation in die Pigmentform überführt. Das Pigment kann dann in üblicher Weise isoliert werden, z.B. durch Gefriertrocknung, wenn eine dafür geeignete zweite Flüssigkeit verwendet worden ist, oder durch Trocknung im Vakuum.

Weiterhin kann bei der Synthese erhaltenes Rohpigment ohne vorherige Trocknung nach dem erfindungsgemäßen Verfahren gereinigt werden. Hierbei wird das Rohpigment in Form des organische Flüssigkeiten enthaltenden Preßkuchens in der ersten Flüssigkeit suspendiert und die vorhandenen anderen Flüssigkeiten in der Wärme entfernt. Erfolgt die Synthese des Rohpigments in einer als erste oder zweite Flüssigkeit geeigneten Flüssigkeit versetzt und nach der Gleichgewichtseinstellung und Abkühlen die erste Phase mit den Verunreinigungen abgetrennt. Gegebenenfalls wird die Reinigung wiederholt bis das Rohpigment die gewüschte Reinheit aufweist.

Bei dem vorliegenden Verfahren kann man auch von wäßrigen Suspensionen und wäßrigen Preßkuchen von Rohpigmenten ausgehen, wenn das Rohpigment aus der wäßrigen Suspension durch Rühren und Mischen mit der zweiten Flüssigkeit in diese übergeht. Nach dem Abtrennen der wäßrigen pigmentfreien Phase wird, gegebenenfalls nach dem Aufkonzentrieren, die erste Flüssigkeit zugegeben und wie oben angegeben die Reinigung durchgeführt.

Das Verfahren soll druch die folgenden Ausführungsbeispiele weiter erläutert werden. Die Temperaturen sind in °C angegeben. Die Prozentangaben beziehen sich auf das Gewicht.

**Beispiel 1**

In einem 500-ml-Erlenmeyerkolben werden mit einem Magnetrührer in 100 g 99%ige Ameisensäure, 100 g Kupferphthalocyanin (Chlorgehalt 3,0 %; hergestellt nach dem Backverfahren aus Kupfer-I-chlorid und Phthalodinitril) eingerührt. Das Gemenge wird eine Stunde bei 100°C gerührt. Dann läßt man 80 g p-Xylol zulaufen und dekantiert nach 15 Minuten die braungefärbte Ameisensäurephase ab. Man ersetzt die abdekantierte Ameisensäurephase durch das gleiche Volumen Ethylenglykol, durchmischt in der Wärme und trennt das Ethylenglykol ab. Dieser Vorgang wird 3mal durchgeführt. Danach wird die Xylolpaste getrocknet. Man erhält 80 g gereinigtes Kupferphthalocyanin.

Mit praktisch gleichem Erfolg kann die Ameisensäure durch die gleiche Menge Glyzerin ersetzt werden.

**Beispiel 2**

600 g einer wasserfreien Paste von Hexadecachlorkupferphthalocyaninpigment in p-Xylol mit einem Gehalt von 33% an Pigment (hergestellt nach DE-AS 11 14 462, Beispiel 1) und 200 g Ethylenglykol werden in einem 1-1-Glasgefäß bei 130°C eine Stunde gerührt. Die hellgelb gefärbte Glykolphase wird abdekantiert (sie liefert nach dem Verdünnen mit Wasser einen gelbgrauen Niederschlag, der abgesaugt und in üblicher Weise isoliert werden kann). Das Zugeben und Abtrennen des Glykols wird 3mal wiederholt bis das abfließende Glykol nahezu farblos ist. Danach wird das restliche, an der Xylol-Pigmentpaste haftende Glykol durch Destillation ausgekreist und die glykolfreie Xylolpaste bei 1 Torr getrocknet. Man erhält 190 g eines chemisch und coloristisch besonders reinen Hexadecachlorkupferphthalocyaninpigments.

**Beispiel 3**

a) 500 g feinteiliges agglomeriertes Kupferphthalocyanin (Chlorgehalt 3 %; hergestellt aus o-Phthalodinitril und Kupfer-I-chlorid nach dem Backverfahren und 36stündigem Mahlen in einer Kugelmühle mit Eisenkugeln) und 600 g Ethylenglykol werden in einem 2-1-Edelstahlkessel, der mit einem Ankerrührer und einem Destillationsaufsatz mit Phasentrennvorrichtung und einer 1 1 Vorlage versehen ist, eine Stunde bei 100° C gerührt. In die Suspension läßt man unter ständigem Rühren 750 g p-Xylol einfließen. Nach einstündigem Rühren bei 100° C wird der Rürer abgestellt und das Bodenventil geöffnet. Es fließen ca. 450 g gelb-braun gefärbtes Glykol ab (gegebenenfalls wird das Ventilloch mit einem Eisendraht freigemacht). Es werden 500 g frisches Glykol nachgesetzt, 60 Minuten bei 100° C gerührt, der Rührer abgestellt und das Bodenventil geöffnet. Es fließen ca. 500 g helleres Glykol ab. Es wird soviel Ethylenglykol nachgegeben wie als erste Flüssigkeit abgeflossen ist, und der Vorgang Rühren, Ablassen, Glykol erneuern noch einnal wiederholt, dann ist das abfließende Glykol praktisch farblos. Danach wird das Xylol-CuPc-Gemisch bis zum Siedepunkt des Gemisches von 135° C erhitzt und unter Auskreisen des restlichen Glykols bis zum Siedepunkt des p-Xylols von 138° C weiter erhitzt, was ca. 1-2 Stunden dauert. Danach wird noch 10 Stunden bei 135-138° C gerührt, der Rührer abgestellt und unter allmählichem Anlegen von Vakuum bei einer Heiztemperatur von 170° C getrocknet. Die Xyloldämpfe werden in einem Kondensator gekühlt und in der Vorlage gesammelt. Nach 10 Stunden und einem Enddruck von 50 bis 150 mbar wird belüftet. Falls eine Probe nicht geruchfrei ist, wird das Evakuieren und Belüften mehrmals wiederholt bis das Produkt geruchfrei ist.

Ausbeute: 465 g eines hellblauen, staubarmen Kupferphthalocyaninpigments, das 50-70 % α-Modifikation und den Rest in der β-Modifikation enthält. Es liefert im Lack farbtonreine, farbstarke Färbungen und übertrifft Pigmentformen, die aus der gleichen Rohware durch Quellen in Schwefelsäure erhalten werden, in der Farbstärke, der Farbtonreinheit und in der Dispergierbarkeit bei gleichzeitig etwas grünerem Farbton.

b) Man verfährt wie unter a) angegeben, verwendet jedoch statt Ethylenglykol die gleiche Menge einer 2 %igen Lösung von wasserfreiem Ammoniak in Ethylenglykol. Man isoliert in diesem Fall 485 g Kupferphthalocyanin, das 40 bis 50 % der α-Modifikation enthält (Rest: β-Modifikation). In den coloristischen Eigenschaften verhält sich das Pigment praktisch wie das nach a) erhaltene.

c) Wird das Pigment nach der Formierung aus der glykolfreien Paste von a) oder b) durch Gefriertrockung isoliert, so erhält man ein Pigment, das sehr leicht dispergierbar ist.

**Beispiel 4**

50 g Kupferphthalocyanin (hergestellt aus Phthalodinitril und Kupferpulver nach dem Backverfahren) und 70 g Ethylenglykol werden in einem 500-ml-Erlenmeyerkolben in einem 100° C warmen Ölbad mit einem Magnetrührer 1 Stunde gerührt. Dann setzt man 75 g Xylol-Isomerengemisch zu, rührt 30 Minuten weiter und dekantiert die sich abscheidende bräunlich gefärbte Clykokphase ab. Danach setzt man 75 g frisches Glykol nach, rührt 15 Minuten weiter und dekantiert die Glykolphase ab. Dieser Vorgang wird mit frischem Glykol 3mal wiederholt, dann ist das abdekantierte Glykol praktisch farblos. Die blaue, pastöse Masse wird auf ein Trockenblech gegossen und getrocknet. Man erhält 45 g reines Kupferphthalocyanin, das nach bekannen Formierungsverfahren in coloristisch wertvolle Pigmentfarbstoffe der α- oder der β-Modifikation überführt werden kann.

**Beispiel 5**

500 g des in Beispiel 3 verwendeten Kupferphthalocyanins und 600 g Ethylenglykol werden in dem in Beispiel 1 angegebenen Apparat 2 Stunden bei 100° C gerührt. Man gibt 750 g Tetrachlorethylen zu, rührt eine Stunde bei 110° C, öffnet das Bodenventil und läßt die Glykolphase ablaufen: ca. 500 g gelblich-grün gefärbte Glykolphase. Dann werden 300 g Glykol nachgegeben, 15 Minuten gerührt und das Glykol abgelassen. Dieser Vorgang wird noch 2mal wiederholt. Danach werden 750 g Tetrachlorethylen zugegeben und das Gemenge 16 Stunden bei 115° C gerührt. Anschließend wird das restliche Glykol bei 115-120° C ausgekreist und der Kesselinhalt durch Anlegen von Vakuum und Erwärmen mit 140° C warmem Öl zur Trockene eingedampft. Ausbeute: 470 g Kupferphthalocyanin (Chlorgehalt 3 %) das zu etwa 70 % in der α-Modifikation vorliegt.

Werden anstelle von Titrachlorethylen die gleichen Mengen Dichlorethan verwendet und bei 60° C gearbeitet, dann erhält man ebenfalls reines Kupferphthalocyanin, das zu mehr als 70 % in der α-Modifikation vorliegt.

**Beispiel 6**

200 g des in Beispiel 3 verwendeten Kupferphthalocyanins und 400 g 99%ige Ameisensäure werden in einem 1-1-Glastopf 20 Stunden bei 90° C gerührt. Dann läßt man nacheinander 200 g Ethylenglykol und 300 g p-Xylol zulaufen, nährt 1 Stunde bei 100° C nach und hebert die abgeschiedene Ethylenglykol-Ameisensäure-Phase ab. Zugeben und Abtrennen von Ethylenglykol wird so lange wiederholt bis die Glykolphase ein pH von 5 hat. Danach wird

das Restglykol ausgekreist und der Inhalt durch Abdampfen des Xylols bei 170° C Badtemperatur getrocknet. Ausbeute: 180 g eines farbstarken, farbtonreinen Kupferphthalocyanins (Chlorgehalt 3%), das zu über 75% aus der α-Modifikation besteht.

Aus dem Gemisch kann die Glykolphase ebensogut durch Abdekantieren entfernt werden.

**Beispiel 7**

200 g feinteiliges, agglomeriertes Rohkupferphthalocyanin (hergestellt aus o-Phthalodinitril und Kupferpulver nach dem Backverfahren, das in einer Kugelmühle mit Eisenkugeln 36 Stunden gemahlen wurde; Agglomerate aus Primärteilchen von 0,03 bis 0,1 µm) werden in einem 1-1-Rührgefäß in 200 g Glykol eingetragen und 1 Stunde bei 140° C gerührt. Nach dem Abkühlen auf 80° C werden 400 g Trichlorethylen eingerührt und die Mischung 1 Stunde bei 80° C nachgerührt. Die bläulich-gelbe Glykolphase wird abdekantiert und durch frisches Glykol ersetzt. Dieser Vorgang wird noch zweimal wiederholt, dann ist die Glykolphase fast farblos.

Die im Gefäß zurückbleibende Suspension wird in folgender Weise aufgearbeitet:

Das Gefäß wird mit Wasser gefüllt, erwärmt und nach Erreichen von 70° C das Wasser abgegossen. Dieser Vorgang wird 2mal wiederholt. Anschließend wird dem Gemisch aus Kupferphthalocyanin und zweiter Flüssigkeit soviel Wasser zugegeben, daß dieses gerührt werden kann, und das Gemenge 10 Stunden unter Rückfluß gehalten (Sumpftemperatur 80° C). Das Trichlorethylen wird dann als Azeotrop bei 79° C ausdestilliert und die wasserfeuchte Pigmentpaste getrocknet. Ausbeute: 186 g eines chemisch reinen Kupferphthalocyaninpigments, das zu 48 % in der β-Modifikation vorliegt.

**Beispiel 8**

In einem 2-1-Rührdruckgefäß mit Ankerrührer werden 500 g o-Phthalodinitril, 55 g Kupferpulver, 0,3 g Molybdänsäureanhydrid und 1900 g Nitrobenzol unter einer Ammoniakatmosphäre (Überleiten von Ammoniak) im Verlauf von 3 Stunden gleichmäßig auf 200° C erhitzt und das Gemenge 10 Stunden bei 200° C gehalten. Durch allmähliches Anlegen von Unterdruck wird Nitrobenzol abdestilliert und nachdem sich ein Druck von 50 mbar eingestellt hat zur Trockne eingedampft. Der Rührer wurde abgestellt als 1000 g Nitrobenzol übergegangen waren. Zu dem trockenen Rückstand werden nacheinander 750 g Xylol und 500 g Ethylenglykol bei 130° C zugegeben. Dann wird wieder gerührt. Nach 2stündigem Rühren bei 130° C hat sich das Zweiphasengemisch gebildet. Man läßt die flüssige Glykolphase ablaufen und ersetzt diese durch die gleiche Menge Ethylenglykol. Es wird 30 Minuten bei 130° C gerührt und das Glykol wieder abgelassen. Dieser Vorgang wird noch einmal wiederholt. Danach wird das im Gefäß zurückgebliebene Glykol durch Destillation azeotrop ausdestilliert. Sobald der Siedepunkt des reinen Xylols erreicht ist, wird der Rührer abgestellt und der Gefäßinhalt durch Anlegen von Unterdruck bei 140° C Badtemperatur zur Trockne eingedampft und solange unter Vakuum gehalten bis eine Probe geruchsfrei ist, was nach 10 Stunden der Fall ist. Man erhält 502 g eines chemisch reinen β-Kupferphthalocyanins.

**Beispiel 9**

In einem 2-1-Edelstahlrührkessel mit Ankerrührer werden 300 g o-Phthalodinitril, 35 g Kupferpulver, 0,3 g Molbdänsäureanhydrid und 450 g Ethylenglykol vorgelegt und bei 70° C in 2 Stunden mit Ammoniakgas gesättigt. Dann wird die Ammoniakzufuhr abgestellt. Das Gemisch wird in 2 Stunden in gleichmäßigen 10° C Intervallen auf 140° C aufgeheizt und bei dieser Temperatur gehalten bis die Ammoniakgasentwicklung beendet ist. Dies ist nach etwa 3 Stunden der Fall. Dann läßt man 300 g p-Xylol zufließen, rührt 1 Stunden bei 130° C und läßt über das Bodenventil die bräunlich gefärbte Glykolphase abfließen (geringe Mengen mitgerissenes Xylol/ CuPc-Gemisch können durch ein grobmaschiges Sieb abgetrennt und in den Rührkessel zurückgegeben werden). Dabei laufen ca. 300 g Glykolphase ab. Es werden 300 g Glykol in den Kessel nachgegeben, 15 Minuten bei 130° C gerührt, der Rührer abgestellt und das Glykol erneut abgelassen. Der Vorgang wird sooft wiederholt bis das Glykol praktisch farblos abläuft, was in der Regel nach 2 Spülgängen der Fall ist.

Dann wird das restliche Glykol, das an der Kupferphthalocyanin-Xylolpaste oberflächlich anhaftet, als Azeotrop bei 135° C ausdestilliert, wobei die Xylolphase in den Kessel zurückgeleitet wird. Sobald sich der Siedepunkt des reinen p-Xylols von 138° C eingestellt hat, wird der Rührer abgestellt und bei einer Heizbadtemperatur von 170° C Unterdruck in dem Maße angelegt wie die p-Xyloldämpfe am Kondensator verflüssigt werden. Die Hauptmenge des p-Xylols, in der Regel 60-80 %, werden so durch das Anlegen von Unterdruck verdampft. Wenn der volle Unterdruck der Wasserstrahlpumpe auf der Anlage liegt, wird noch 6 bis 10 Stunden bei 150° C gehalten bis eine Probe geruchsfrei ist.

Ausbeute:- 303 g β-Kupferphthalocyanin in Form eines lockeren Granulats.

**Beispiel 10**

400 g Rohpigment der Formel

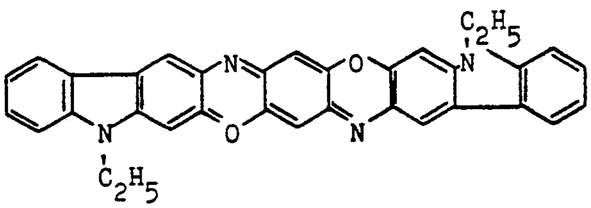

werden in einer 4 1-Schwingmühle mit 8 kg Eisenkugeln vom Durchmesser 2 bis 2,5 cm 36 Stunden vermahlen.

30 g Mahlprodukt, 60 g p-Xylol und 90 g Glykol werden in einem 500 ml Erlenmeyerkolben 2 Stunden in einem auf 100° C erhitzten Ölbad gerührt. Es bildet sich eine tief dunkelblaue Pigment-Xylolpaste und eine rotstichig dunkelviolett gefärbte Glykolphase. Die Glykolphase wird über ein grobmaschiges Sieb abdekantiert. (Eventuell mitgerissene Pigmentpaste kann mit einem Spatel vom Sieb abgehoben und in den Kolben zurückgegeben werden.) Es werden 100 g Glykol nachgesetzt, 20 Minuten bei 100° C gerührt und das Glykol erneut abdekantiert. Die Glykolwäsche wird 3 mal wiederholt, dann ist das ablaufende Glykol nur noch schwach violett gefärbt. Die Pigment-Xylol-Paste wird bei 1 Torr getrocknet. Ausbeute: 29 g Violettpigment in einer stark lichtstreuenden, besonders blaustichigen und sehr leicht dispergierbaren Pigmentform.

**Beispiel 11**

400 g auf konventionelle Weise hergestelltes, grobkristallines rohes 3, 4, 9, 10-Perylentetrakarbonsäure-bis-3, 5-dimethylanilid werden wie in Beispiel 10 angegeben in einer Kugelmühle gemahlen.

40 g des Mahlproduktes und 60 g p-Xylol we rden in einem 500 ml Erlermeyerkolben mit einem kräftigen Rührmagneten eine Stunde auf 120° C erhitzt, wobei sich eine zähe, gerade noch rührbare rote Pigmentpaste bildet. Man setzt 80 g Glykol zu, hält unter langsamem Rühren eine Stunde bei 120° C. Es bildet sich eine rot fluoreszierende rötlich braune Glykolphase und ein Xylol-Pigmentgranulat.

Die Glykolphase wird über ein Sieb abdekantiert, durch frisches Glykol ersetzt und dieser Vorgang so oft wiederholt, bis die Glykolphase nahezu farblos ist. Danach wird mit Wasser aufgefüllt, das Wasser abdekantiert und schließlich das glykolfreie Pigmentgranulat in eine Schale entleert und getrocknet.

Man erhält 38 g 3,4,9,10-Tetrakarbonsäure-bis-3,5-di-methylanilid in einer deckenden, leichtstreuenden, besonders gut weichmacherechten und gut dispergierbaren Pigmentform.

**Beispiel 12**

40 g Perylen-3,4,9, 10-tetrakarbonsäure-bis-phenetidid, die nach DE-AS 25 45 701, Beispiel 1 gemahlen wurden, und 80 g o-Dichlorbenzol werden in einem 500 ml Erlenmeyerkolben eine Stunde bei 120° C mit einem Rührmagneten gerührt, wobei sich eine zähe, gerade noch rührbare Paste bildet. Man setzt 80 g Glykol zu und rührt langsam 1 Stunde bei 120° C weiter. Ca. 50 g einer bräunlich roten, schwach flüoreszierenden Glykolphase werden abdekantiert und durch die gleiche Menge frisches Glykol ersetzt. Nach je einer weiteren Stunde wird das Abdekantieren des Glykols noch zweimal wiederholt bis es nunmehr schwach gefärbt ist. Durch mehrfaches Spülen der Pigment-Dichlorbenzolpaste mit Wasser wird restliches Glykol ausgewaschen und schließlich die Dichlorbenzol-Pigmentpaste im Vakuum bei 100° C getrocknet. Man erhält 38 g 3, 4, 9, 10-Perylentetrakarbonsäure-bis-phenetidid in einer deckenden Pigmentform.

**Beispiel 13**

380 g Rohpigment der Formel

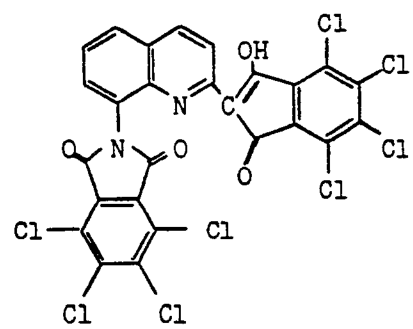

(hergestellt nach DE-PS 17 70 960; Reingehalt 90 bis 95%) und 20 g wasserfreies Kaliumkarbonat werden in einer Schwingmühle wie in Beispiel 10 gemahlen (Dauer: 10 h).

In einem kegelförmigen 2 1 Edelstahl-Autoklaven werden 100 g Mahlprodukt, 150 g p-Xylol und 1, 5 l Wasser 5 Stunden bei 92° C verrührt. Man läßt die gelbe wäßrige, alkaliche Phase über das Bodenventil ab und ersetzt das abgelaufene Wasser durch die gleiche Menge frisches Wasser. Der vorgang wird solange wiederholt, bis das abfließende Wasser neutral reagiert.

Danach wird das Restwasser durch azeotrope Destillation ausgekreist. Dem Rückstand werden 200 g Glykol zugesetzt und das Gemisch bei 120° C 3 Stunden gerührt. Danach wird die gelbbräunliche Glykolphase abgelassen und

frisches Glykol nachgesetzt. Der Vorgang wird 3 mal wiederholt, bis das abgelaufene Glykol nahe zu farblos ist. Das Restglykol wird durch azeotrope Destillation bei 134 bis 138°C ausgekreist und die Xylolpaste bei einer Heizbadtemperatur von 140 bis 170°C unter Anlegen eines Vakuums von 37,5 mbar (50 Torr) bei abgeschaltetem Rührwerk getrocknet. Man erhält 90 g eines chemisch reinen, coloristisch und anwendungstechnisch wertvollen Gelbpigmentes mit vorzüglichen Lösungsmittel und Weichmacherechtheiten.

**Beispiel 14**

a) 400 g rohes Flavanthron werden in einer 4 l Schwingmühle mit 8 kg Eisenkugeln vom Durchmesser 2 bis 2,5 cm vermahlen.

b) 40 g Mahlprodukt a), 60 g p-Xylol und 60 g Glykol werden unter Rühren im Verlauf von 2 Stunden gleichmäßig auf 120°C erhitzt. Es bildet sich eine rötlich gelbe Pigment-Xylolpaste und eine rötlich gefärbte Glykolphase. Die Glykolphase wird abdekantiert und durch 100 g frisches Glykol ersetzt. Unter weiterem Erhitzen auf 120°C wird in Abständen von je einer Stunde das Abdekantieren und Ersetzen des Glykols noch zwei Mal wiederholt. Danach wird das Rührgefäß mit heißem Wasser aufgefüllt, eine Stunde bei 90°C gerührt, das Wasser abdekantiert und die Pigmentpaste auf einem Trockenblech im Vakuumtrockenschrank bei 100°C und 0,75 mbar (1 Torr) getrocknet. Man erhält 39 g chemisch reines Flavanthron in einer deckenden, vorzüglichen licht- und wetter- und überlackierechten Pigmentformen.

**Beispiel 15**

400 g rohes C.I. Vat Yellow 20; C.I. Nr. 68420 werden in der Schwingmühle wie der Rohfarbstoff in Beispiel 14a) gemahlen. 30 g des Mahlproduktes und 60 g o-Dichlorbenzol werden in einem 500 ml Erlenmeyer mit einem Glasstab angeteigt. Es werden 60 g Glykol zugesetzt und das Gemenge unter gelegentlichem Umrühren mit dem Glasstab oder einem Rührmagneten 2 Stunden bei 120°C gehalten. Danach wird die jetzt rötlich gefärbte Glykolphase abgegossen und 100 g frisches Glykol nachgesetzt. Nach jeweils 2 Stunden bei 120°C wird die Glykolphase erneut abgegossen und durch frisches Glykol ersetzt bis sich das Glykol praktisch nicht mehr anfärbt. Dies ist beim dritten mal der Fall. Danach wird wie in Beispiel 14 aufgearbeitet. Man erhält ein Gelbpigment in einer besonders wetterechten Pigmentform.

**Beispiel 16**

In einem 500 ml Erlenmeyerkolben werden 50 g feinteiliges Semichlorkupferphthalocyanin (hergestellt aus o-Phthalodinitril und Kupfer-I-chlorid nach dem Backverfahren und 36 h in der Kugelmühle mit Eisenkugeln gemahlen) in 50 g Ethylenglykol 30 Minuten bei 90°C gerührt. Man läßt ein Gemisch aus 25 g Toluol und 25 g Monochlorbenzol einfließen und rührt bei 90°C weiter. Nach ca. 20 Minuten hat sich eine Pigment-Aromatenpaste gebildet. Nach weiteren 30 Minuten kann die stark bräunlich gelbe Glykolphase abdekantiert werden. Es werden 50 g Glykol nachgesetzt und der Waschvorgang wie in Beispiel 4 so oft wiederholt bis das abfließende Glykol farblos ist. Danach wird die Paste auf ein Trockenblech geschüttet und bei 100°C im Vakum von 0,75 mbar (1 Torr) getrocknet. Man erhält 46 g eines farbstarken Semichlorkupferphthalocyanins, das ca. 60 % α-Modifikation enthält.

**Patentansprüche**

1. Verfahren zur Reinigung von rohen organischen Pigmenten durch Suspendieren in organischen Flüssigkeiten in der Wärme, dadurch gekennzeichnet, daß man das rohe Pigment in einem Gemisch aus Ameisensäure, Ethylenglykol, Glycerin oder Gemische davon als erste Flüssigkeit und Benzol, Toluol, Xylol, Propylbenzol, Butylbenzol, Chlorbenzol, Dichlorbenzol, Trichlorbenzol, Chlortoluol, Nitrobenzol, Nitrotoluol, Pentan, Hexan, Heptan, Octan, Petrolether, Cyclohexan, Chloroform, Tetrachlorkohlenstoff, Dichlorethan, Dichlorethylen, Trichlorethylen, Tetrachlorethylen, 1, 2-Dibromethan oder Gemische davon als zweite Flüssigkeit suspendiert, die Suspension bei 50O bis 180°C bis zur Einstellung des Gleichgewichts mischt, die Phasen sich trennen läßt, die die Verunreinigungen enthaltende Phase (erste Flüssigkeit) abtrennt und das gereinigte Pigment aus der anderen Phase (zweite Flüssigkeit) isoliert.

2. Verfahren gemäß Anspruch 1, dadurch gekennzeichnet, daß man ein organisches Rohpigment aus der Reihe der Phthalocyanine, der Chinophthalone, der Perylen-3,4, 9, 10-tetracarbonsäurediinide, der Dioxazine, der Küpenfarbstoffe oder der Azopigmente verwendet.

3. Verfahren nach Anspruch 2, dadurch gekennzeichnet, daß man ein rohes Phthalocyanin verwendet.

4. Verfahren gemäß Anspruch 1, 2 oder 3, dadurch gekennzeichnet, daß man ein Gemisch aus Ethylenglykol und Xylol, Tetrachlorethylen, Trichlorethylen oder 1,2-Dibromethan oder ein Gemisch aus Ameisensäure und Xylol oder Tetrachlorethylen als miteinander nicht

vollständig mischbare Flüssigkeiten verwendet.

5. Verfahren gemäß den Ansprüchen 1 bis 4, dadurch gekennzeichnet, daß man, bezogen auf Rohpigment, die 0,5-bis 2,5 fache Gewichtsmenge an erster Flüssigkeit und die 0,5-bis 5 fache Gewichtsmenge an zweiter Flüssigkeit anwendet.

6. Verfahren gemäß den Ansprüchen 1 bis 5, dadurch kennzeichnet, daß man zur Reinigung die bei der Synthese erhaltene organische Suspension des Rohpigments verwendet, gegebenenfalls die Suspension aufkonzentriert und zu der Suspension die andere mit der in der Suspension vorhandenen Flüssigkeit teilweise bis nicht mischbare Flüssigkeit zufügt.

7. Verfahren gemäß den Ansprüchen 1 bis 6, dadurch gekennzeichnet, daß man ein feinteiliges Rohpigment, dessen Primärteilchengröße ⩽0,1 µm ist, verwendet und nach dem Abtrennen der die Verunreinigungen enthaltenden ersten Flüssigkeit das feinteilige Rohpigment in der zweiten Flüssigkeit in die Pigmentform überführt und dann gegebenenfalls das Pigment isoliert.

8. Verfahren gemäß Anspruch 7, dadurch gekennzeichnet, daß man als Rohpigment ein feinteiliges agglomeriertes Rohkupferphthalocyanin, das bis zu 2 Chlor- oder Bromatome im Molekül enthalten kann, ein feinteiliges agglomeriertes Polychlorkupferkphthalocyanin oder Polybromchlorkupferphthalocyanin verwendet, wobei dei Primärteilchengröße dieser Rohpigmente ⩽0,1 µm ist.

9. Verfahren gemäß Anspruch 7 oder 8, dadurch gekennzeichnet, daß man eine organische Suspension von rohem Kupferphthalocyanin verwendet.

## Claims

1. A process for the purification of a crude organic pigment by suspending it in a hot organic liquid, wherein the crude pigment is suspended in a mixture of formic acid, ethylene glycol, glycerol or a mixture thereof, as the first liquid, and benzene, toluene, xylene, propylbenzene, butylbenzene, chlorobenzene, dichlorobenzene, trichlorobenzene, chlorotoluene, nitrobenzene, nitrotoluene, pentane, hexane, heptane, octane, petroleum ether, cyclohexane, chloroform, carbon tetrachloride, dichloroethane, dichloroethylene, trichloroethylene, tetrachloroethylene, 1,2-dibromoethane or a mixture thereof, as the second liquid, the suspension is mixed at 50-180°C until equilibrium is reached, the phases are allowed to separate, the phase (first liquid) which contains the impurities is separated off, and the purified pigment is isolated from the other phase (second liquid).

2. A process as claimed in claim 1, wherein an organic crude pigment from the series of the phthalocyanines, the quinophthalones, the perylene-3,4,9,10-tetracarboxylic acid diimides, the dioxazines, the vat dyes or the azo pigments is used.

3. A process as claimed in claim 2, wherein a crude phthalocyanine is used.

4. A process as claimed in claim 1, 2 or 3, wherein a mixture of ethylene glycol and xylene, tetrachloroethylene, trichloroethylene or 1,2-dibromoethane or a mixture of formic acid and xylene or tetrachloroethylene is used as the mixture of liquids which are not completely miscible with one another.

5. A process as claimed in claims 1 to 4, wherein the weight ratio of first liquid to crude pigment is from 0,5 to 2.5:1, and the weight ratio of second liquid to crude pigment is from 0,5 to 5:1.

6. A process as claimed in claims 1 to 5, wherein the organic suspension of the crude pigment, as obtained from the process of synthesis, is used for the purification process; if desired, the suspension is concentrated; and the other liquid, which is partially or completely immiscible with the liquid present in the suspension, is added to the suspension.

7. A process as claimed in claims 1 to 6, wherein a finely divided crude pigment having a primary particle size of ⩽0,1 µm is used and, after separating off the first liquid containing the impurities, the finely divided crude pigment in the second liquid is converted into the pigmentary form by heating, and is then isolated, if desired.

8. A process as claimed in claim 7, wherein the crude pigment used is a finely divided agglomerated crude copper phthalocyanine which may contain up to 2 chlorine or bromine atoms in the molecule, a finely divided agglomerated polychloro-copper phthalocyanine or polybromochloro-copper phthalocyanine, the primary particle size of these crude pigments being ⩽0.1 µm.

9. A process as claimed in claim 7 or 8, wherein an organic suspension of crude copper phthalocyanine is used.

## Revendications

1. Preoédé de purification de pigments organiques bruts par leur mise en suspension dans des liquides organiques à la chaleur, caractérisé en ce qu'on met le pigment brut en suspension dans un mélange comprenant, en tant que premier liquide, de l'acide formique, de l'éthylèneglycol, de la glycérine ou des mélanges de ceux-ci et, en tant que second liquide, du benzène, du toluène, du xylène, du propylbenzène, du butylbenzène, du chlorobenzène, du dichlorobenzène, du trichlorobenzène, du chlorotoluène, du nitrobenzène, du nitrotoluène, du pentane, de l'hexane, de l'heptane, de l'octane, de l'éther de pétrole, du cyclohexane, du chloroforme, du

tétrachlorure de carbone, du dichloréthane, du dichloréthylène, du trichloréthylène, du tétrachloréthylène, du 1,2-dibromo-éthane ou des mélanges de ceux-ci, on mélange la suspension à une température de 50 à 180° C jusqu'à l'établissement de l'équilibre, on laisse les phases se séparer, on sépare la phase qui contient les impuretés (premier liquide) et on isole le pigment purifié dans l'autre phase (second liquide).

2. Procédé selon la revendication 1, caractérisé en ce qu'on utilise un pigment organique brut de la série des phtalocyanines, des quinophtalones, des diimides d'acide pérylène 3,4,9,10-tétracarboxylique, des dioxazines, des colorants de cuve ou des pigments azoïques.

3. Procédé selon la revendication 2, caractérisé en ce qu'on utilise une phtalocyanine brute.

4. Procédé selon l'une quelconque des revendications 1 à 3, caractérisé en ce qu'on utilise, en tant que liquides non complètement miscibles entre eux, un mélange d'éthylèneglycol et de xylène, de tétrachloréthylène, de trichloréthylène ou de 1,2-dibromo-éthane ou un mélange d'acide formique et de xylène ou de tétrachloréthylène.

5. procédé selon l'une quelconque des revendications 1 à 4, caractérisé en ce qu'on utilise, par rapport au pigment brut, une quantité en poids de premier liquide de 0,5 à 2,5 fois et une quantité en poids de second liquide de 0,5 à 5 fois.

6. Procédé selon l'une quelconque des revendications 1 à 5, caractérisé en ce qu'on utilise, pour la purification, la suspension organique du pigment brut obtenue lors de sa synthèse de celui-ci, on concentre éventuellement cette suspension et on ajoute à cette suspension l'autre liquide qui est partiellement à non miscible au liquide présent dans la suspension.

7. Procédé selon l'une quelconque des revendications 1 à 6, caractérisé en ce qu'on utilise un pigment brut finement divisé, dont la grosseur de particules primaires est $\leqslant 0{,}1\ \mu m$ et, après la séparation du premier liquide contenant les impuretés, on met le pigment brut finement divisé, contenu dans le second liquide, sous la forme de pigment, puis on isole éventuellement le pigment.

8. Procédé selon la revendication 7, caractérisé en ce qu'on utilise, comme pigment brut, une phtalocyanine de cuivre brute agglomérée finement divisée qui peut contenir jusqu'à 2 atomes de chlore ou de brome dans la molécule, une polychlorophtalocyanine de cuivre ou polybromochlorophtalocyanine de cuivre agglomérée finement divisée, la grosseur de particules primaires de ces pigments bruts étant $\leqslant 0{,}1\ \mu m$.

9. Procédé selon la revendication 7 ou 8, caractérisé en ce qu'on utilise une suspension organique de phtalocyanine de cuivre brute.